# EUROPEAN PATENT SPECIFICATION

(11) **EP 4 719 263 B1**
(45) Date of publication and mention of the grant of the patent: **14.10.2026**
(21) Application number: 24762428.1
(22) Date of filing: 09.08.2024
(51) Int. Cl.: A61C 8/00

(54) **DEVICE FOR OPTIMIZING THE PRIMARY STABILITY FOR DENTAL IMPLANTS INSERTED AT THE SAME SURGICAL TIME WITH THE SINUS LIFT PROCEDURE**
VORRICHTUNG ZUR OPTIMIERUNG DER PRIMÄRSTABILITÄT VON GLEICHZEITIG IN DEN SINUSANHEBUNGSVORGANG EINGESETZTEN ZAHNIMPLANTATEN
DISPOSITIF D'OPTIMISATION DE STABILITÉ PRIMAIRE D'IMPLANTS DENTAIRES INSÉRÉS LORS D'UNE PROCÉDURE D'ÉLÉVATION DES SINUS

(43) Date of publication of application: 08.04.2026
(73) Proprietor: Filipov, Iulian, 500299 Brasov (RO)
(72) Inventor: Filipov, Iulian, 500299 Brasov (RO)
(74) Representative: Petculescu, Ana-Maria
(86) International application number: PCT/IB2024/057735
(87) International publication number: WO 2026/033250

(56) References cited:
- EP-A2- 1 776 932
- EP-B1- 0 967 931
- KR-B1- 100 785 660
- KR-B1- 101 140 620
- US-A1- 2006 275 735
- US-A1- 2017 007 373
- US-A1- 2022 354 558

## Description

The invention relates to a device for optimizing the primary stability for dental implants inserted at the same surgical time with the sinus lift procedure.

The augmentation by lifting the sinus procedure (sinus lift), involves lifting the sinus membrane and placing the bone graft material at the same time with placing of the implant, thus reducing the need for a separate healing period. This technique not only simplifies the process for both the patient and the clinician but also reduces the overall treatment time. In case of one-stage (at a single moment in time) sinus lift (lifting of the sinus), where the implant is placed simultaneously with the sinus lift procedure, primary stability is very important. This allows for optimal osseointegration of the implant, which represents the direct structural and functional connection between the living bone and the surface of a dental implant. This leads to a shorter healing period and overall improvement of the treatment outcomes. The quality and quantity of sub-antral bone directly impact the ability of the implant to achieve a corresponding primary stability. In situations in which significant alveolar bone loss hinders the achievement of primary stability by means of the implant alone, the use of an auxiliary temporary anchorage device (DAT), such as a screw, may enhance stability optimisation.

Temporary anchorage devices (DAT) of the dental implants are known in the art.

For example, the document US 2008305456 A1 discloses a device for stabilisation of a sinusal implant, which comprises a dental implant to be placed through the maxillary bone in the maxillary sinus, a plate element to be placed over the oral part of the maxillary bone and adapted to stabilise the implant after its fixation on the implant and a fixing element for fixing the plate element to the implant once the plate element is placed over the oral part of the maxillary bone.

The main drawback of the said device is that the stabilisation of the implant occurs only through the simple contact of the plate element with the bone surface. There is no additional screwing in the bone or an additional means which engages/fastens in the bone adjacent to the location where the dental implant was inserted. Further, the device is made of two distinct components, being subject to a greater error as concerns the correct positioning. Furthermore, the plate element being an alloplastic component, it presents an exposure risk, thus increasing the possibility of infectious complications, failure of integration of the implant and even an iatrogenic maxillary sinusitis.

From document US 2011171601 A1 is known a further stabilisation device intended to be used in combination with an endoosseous dental implant, the device having at least an endoosseous anchoring leg adapted for being installed in the maxillary bone of a patient, such as to cooperate with an external pillar intended to be fixed in the anchoring leg and which has means for fixing a prosthetic dental element, the anchoring leg and the pillar having anti-rotational means which inhibit the relative movements of the pillar in relation to the anchoring leg, once the leg is placed in the anchoring leg with or without installing of the additional device, the additional stabilisation device having a central platform substantially rigid punctured in its centre such as to allow inserting the pillar in the anchoring leg of the implant by means of the stabilisation device, the device comprising also, on each side of the central platform, two side anchoring flexible extensions, such as it may be placed astride on the maxillary bone, flattened on each side of the latter, each extension comprising at least a positioning aperture for at least a fixing screw.

The drawback of this stabilisation device is that it does not allow the positioning of the implant under the osseos record of the alveolar process (of the bone). Having in view that the central platform contacts directly the platform of the dental implant and the bone, there will be a "boundary" reaction of the bone in relation to the platform, and the result is the occurrence of a fibrous area around the implant. The biology/behaviour of the implant is conceived so that its rough surface is fully covered/surrounded by the osseos but not fibrous tissue. Further, the screw fixing of the platform takes place on the vestibular and oral flanks of the bone. Therefore, a more invasive intervention is imposed in order to have access and fix the platform, the possible occurrence of an edema/swelling and a longer recovery time, and for the surgeon, the access with a view to fixing with additional screws is difficult.

The documents RU 196881 U1 and KR 100653850 B1 also disclose devices for stabilising a dental implant. The said devices are ones with high dehiscence risk and subsequent complications: peri-implantitis/sinusitis. The bulkier the device is, the larger the dehiscence risk is. Furthermore, the devices present the same drawbacks of an invasive intervention, the possible occurrence of an edema/swelling and a longer recovery time, and for the surgeon, the difficulty of access with a view to fixing with additional screws. US 2022/354558 A1 discloses an implant system comprising an expandable sleeve actuated by a screw with a reverse pitch to induce radial expansion and achieve fixation in the surrounding bone tissue which makes it not suitable in the context of a sinus lift as the sleeve would expand into a non-stable environment (e.g. the loose graft material) failing to secure the implant.

The present invention aims to provide a temporary anchoring device which totally or partially eliminates the drawbacks associated with the above cited solutions known in the prior art.

More particular, the present invention aims to provide a temporary anchoring device (DAT) which improves the primary stability of the dental implants during the one stage sinus lifting procedures, at the same time with providing a minimally invasive DAT, easy to insert and to remove once the implant reaches the optimal stability.

The above objectives are achieved by means of a device for optimizing the primary stability for dental implants inserted at the same surgical time with the sinus lift procedure, according to the present invention.

The device, according to the invention, comprises a one piece body configured in the lower part in the form of a biocompatible screw featuring a male thread suitable for allowing screwing of the device inside an implant to be stabilised when the device is fitted, the lower part in the form of a screw being continued with a tapered centering section, not threaded, configured to be arranged inside the implant, the major diameter of the said tapered centering section being configured to be positioned flush with the upper face of the implant when the device is fitted in the implant, the tapered centering section being continued with a stabilising section formed externally by a first full turn of thread and a second full turn of thread, the diameter of the second turn of thread being larger than the diameter of the first turn of thread, the stabilising section being configured to be positioned in the sub-sinusal bone and, therefore, outside of the implant, the stabilising section being provided inside with a hexagonal socket configured to cooperate with a hexagonal wrench with a view to fitting of the device in the implant, the one piece body of the device ending on the side opposite to the lower part with an ovoid shaped fixing head section, having a thickness comprised between 0.1 and 0.5 mm, and being configured such that during use its major axis coincides with the mesio-distal axis of the alveolar bone.

Advantageously, the device according to the invention may comprise the following characteristics, taken individually or in any possible technical combination:
- the fixing head section is provided with two semi-circular cut-outs diametrically opposed and located at the ends of the major axis, each cut-out being configured to fix the head of a screw intended to be inserted in the bone adjacent to the implant;
- the fixing head section is provided at an end of the major axis with a fin in which a through hole configured to fix the head of a self-drilling screw intended to be inserted in the bone adjacent to the implant is made;
- the fixing head section is provided at both ends of the major axis with a fin each in which a through hole configured to fix the head of a self-drilling screw intended to be inserted in the bone adjacent to the implant is made;
- the fixing head section is provided at an end of the minor axis with a fin in which a through hole configured to fix the head of a self-drilling screw intended to be inserted in the bone adjacent to the implant is made;
- the device is made of titanium, zirconium or alloys thereof or any other biocompatible alloy;
- the contact surface between the device and the bone is polished or treated, and the contact surface between the device and the gingival tissue is treated with zirconium oxide, magnesium oxide, silver or other types of chemical elements with a view to optimizing the biocompatibility;
- the fixing head section has a preferred thickness of approximately 0.2 mm;
- the major axis of the fixing head section has the dimension comprised between x + 0.3 mm and x + 4 mm, preferably x + 2.2 mm, where x represents the external diameter of the widest turn of the implant to be stabilised;
- the external diameter of the first full turn of the stabilising section is x + 0.2 mm, where x represents the diameter of the widest turn of the implant to be stabilised;
- the external diameter of the second full turn of the stabilising section is x + 0.4 mm, where x represents the diameter of the widest turn of the implant to be stabilised;
- the height of the contact surface between the device and the bone surface is comprised between 0.5 mm and 3 mm, preferably equal to 1.5 mm, and the pitch of the turns forming the outside stabilising section is comprised between 0.3 and 0.7 mm, preferably equal to 0.4 mm.
- the device is manufactured by one or more methods selected among conventional milling, cad-cam, forging, sintering, 3D printing, spark erosion, moulding and further processing with a view to ensure sterile conditions, and the surface of the device is treated by one or more methods selected among sand blasting, polishing/grinding, etching, anodizing, plasma spraying, laser treating, bioactive materials covering, nano-structural or nano-particles treatments.

The advantages of the device for optimizing the primary stability for dental implants inserted at the same surgical time with the sinus lift procedure, according to the present invention, are obvious.

The device is easier to use due to the one piece construction, it is minimally invasive compared to the devices known in the prior art (it takes minimum biological space), it is easier to remove and provides more fixing options (by screwing or additional self-drilling screws). Furthermore, the device for optimizing the primary stability for dental implants inserted at the same surgical time with the sinus lift procedure, according to the present invention, does not interfere with the neighbouring teeth or with other implants due to the limited dimensions and exhibit a low risk of dehiscence due to the thin tip and minimum dimension.

Other objectives, characteristics and advantages of the device, according to the present invention, will appear from the following detailed description of the embodiments of the invention, given below in relation with the attached figures, wherein:
Fig. 1a and 1b show the device for optimizing the primary stability for dental implants inserted at the same surgical time with the sinus lift procedure, according to the present invention, in side (coronal) views;
Fig. 2 shows the device, according to the present invention, in a view from the top;
Fig. 3a to 3e sequentially illustrate the process wherein a dental implant is inserted in the minimum available sub-antral bone during a one stage sinus lift surgery, and fitting of the device according to the present invention in order to achieve optimum primary stability;
Fig. 4a and 4b shows the device according to the present invention fitted in the implant in a side (coronal) view and, respectively, a (transversal) view from the top;
Fig. 5a and 5b are views similar with Fig. 4a, b, further illustrating the self-drilling screws fixed in the anchoring points.
Fig. 6 is a view from the top of the device according to another embodiment of the invention;
Fig. 7 is a view from the top of the device according to another embodiment of the invention;
Fig. 8 is a view from the top of the device according to another embodiment of the invention.

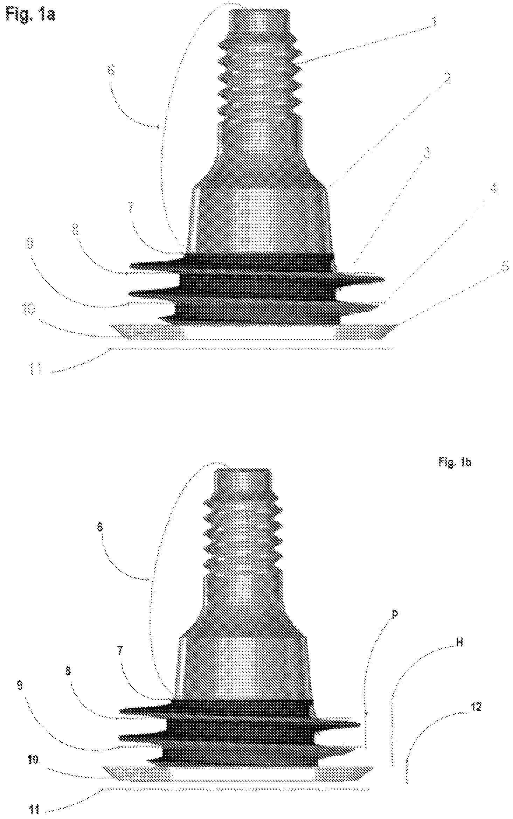

Referring to the attached figures, the device for optimizing the primary stability for dental implants inserted at the same surgical time with the sinus lift procedure, according to the present invention, is made as a one piece body configured in the lower part 1 in the form of a biocompatible screw featuring a male thread suitable for allowing screwing of the device inside the implant D to be stabilised. The lower part 1 in the form of a screw continues with a tapered centering section 2, not threaded, intended to be also arranged inside the implant D. As illustrated in Fig. 1, the major diameter of the said tapered centering section 2 will be positioned flush with the upper face of the implant D, when the device is fitted in the implant.

The tapered centering section 2 continues with a stabilising section formed externally by a first full turn of thread 3 and a second full turn of thread 4, the diameter of the second turn of thread 4 being larger than the diameter of the first turn of thread 3, the stabilising section being intended to be positioned in the sub-sinusal bone and, therefore, outside the implant D. Depending on the length of the contact surface of the stabilisation device (that may vary between 0.5 and 4 mm) and of the pitch of the turn, the number of full turns varies accordingly. Preferably, the external diameter of the first full turn 3 of the stabilising section is x + 0.2 mm, where x represents the diameter of the widest turn of the implant D to be stabilised. Also, the external diameter of the second full turn 4 of the stabilising section is x + 0.4 mm, where x represents the diameter of the widest turn of the implant D to be stabilised.

As results from the attached figures, the stabilising section is provided inside with a hexagonal socket 15 intended to cooperate with a hexagonal wrench with a view to fitting of the device in the implant D.

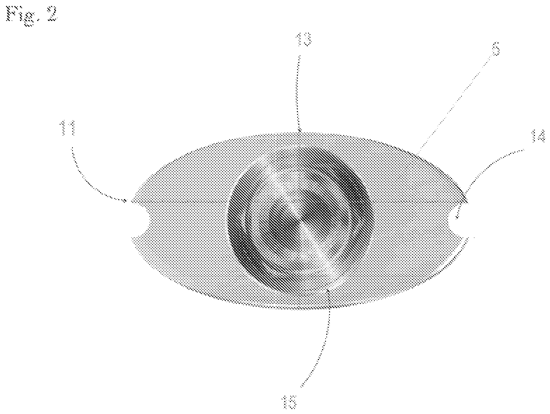

Referring to Fig. 1a, 1b and 2, it may be seen that the one piece body of the device ends with an ovoid shaped fixing head section 5, the major axis 11 of which coincides with the axis of the alveolar bone. Preferably, the fixing head section 5 has a thickness 12 comprised between 0.1 and 0.5 mm, for example approximately 0.2 mm. Further, the major axis 11 of the fixing head section 5 preferably has a dimension comprised between x + 0.3 mm and x + 4 mm, preferably x + 2.2 mm, where x represents the external diameter of the widest turn of the implant D to be stabilised.

Referring to Fig. 1b, the pitch of the turns 3, 4 forming the outside stabilising section is comprised between 0.3 and 0.7 mm, preferably equal to 0.4 mm. The height H of the contact surface between the device according to the invention and the bone surface may be comprised between 0.5 and 3 mm, preferably equal to 1.5 mm.

According to a first embodiment and as illustrated in Fig. 2, the fixing head section 5 is provided with semi-circular two cut-outs 14 diametrically opposed and located at the ends of the major axis 11, each cut-out 14 being configured to fix the head of a self-drilling screw 16 intended to be inserted in the bone adjacent to the implant.

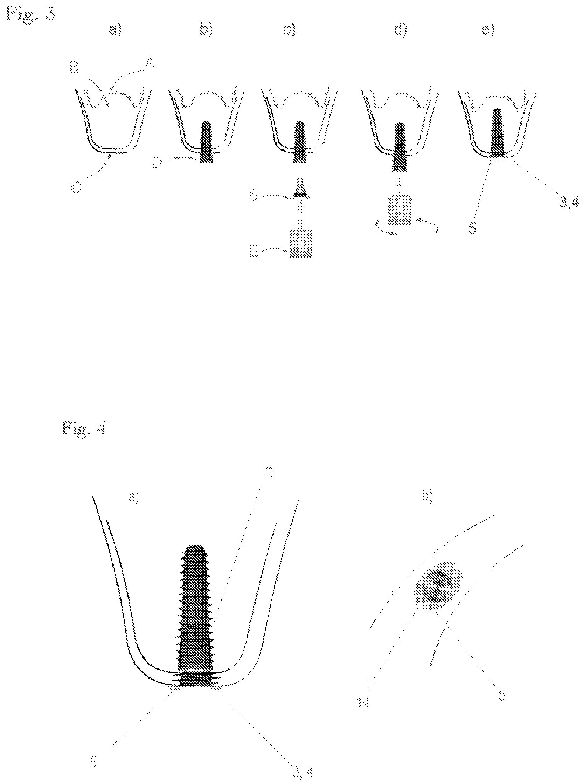

Referring to Fig. 3a to 3e, Fig. 4a-4b and Fig. 5a-5b, these illustrate the steps of fitting an implant and a device according to the present invention. It may be noted that the device, according to the present invention, is conceived to be inserted in the implant, by anchoring a section of it in the bone for increasing the rotational force during the placement of the implant. The thread and the upper end of the device serve a dual purpose, offering an increased torque for an improved fixation and reducing the probability of the implant accidentally slipping in the sinus during the surgical procedures. The threading mechanism and the head of the device operate sinergically for enhancing the torque for an improved fixation, at the same time reducing the potential of accidentally slipping in the sinus during the surgical interventions. The significance of the ovoid shape of the fixing head section 5 lies in its non-invasive nature, allowing a better adaptation relative to the covering gingival tissue. The thin character (approximately 0.2 mm) of the fixing head section 5 allows an improved adaptation to the bone structure and minimizes the risk of intraoral exposure. The surface of the implant plays a significant role in promoting biologic stability. The polished or treated surface of the device and its ovoid shape which fits in the alveolar bone envelope provides the optimal adhesion surface to the covering gingival tissue. This framing of the stabilisation device of the implant (due to the ovoid shape and the framing accordingly with the bone envelope) makes the risk of acting as a spina irritativa to be minimized as it complies with the biologic requirements of homeostasis of the mucosal gingival tissue. In the presumptive context in which a further stabilisation is needed, anchorage points may be used by using self-drilling screws, which in turn confer a further stabilisation of the implant.

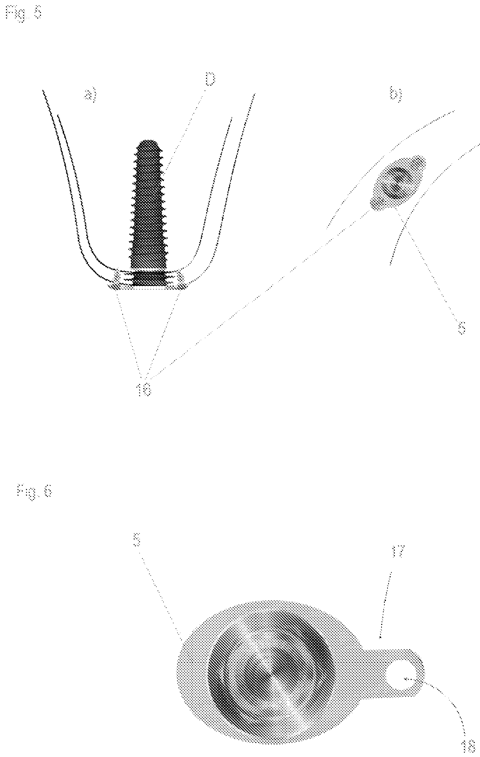

Referring to Fig. 6, according to another embodiment of the device for optimizing the primary stability for dental implants inserted at the same surgical time with the sinus lift procedure, the fixing head section 5 is provided at an end of the major axis 11 with a fin 17 in which a through hole 18 configured to fix the head of a self-drilling screw 16 intended to be inserted in the bone adjacent to the implant is made.

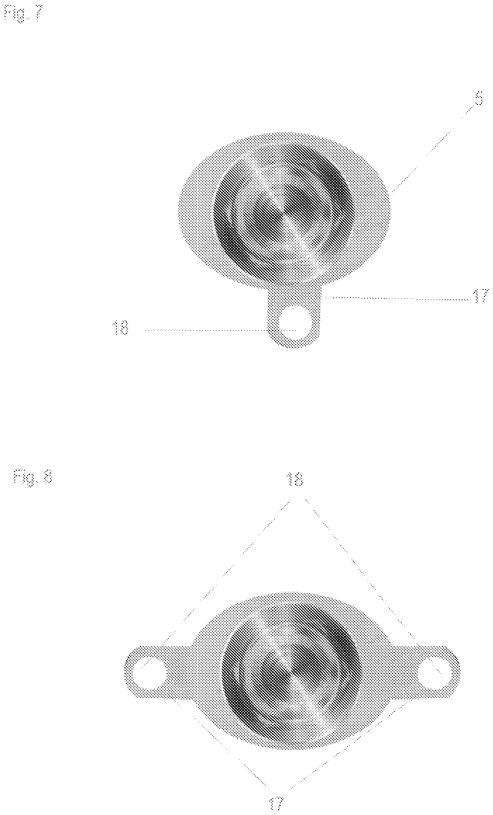

Referring to Fig. 7, according to another embodiment of the device for optimizing the primary stability for dental implants inserted at the same surgical time with the sinus lift procedure, the fixing head section 5 is provided at both ends of the major axis 11 with a fin 17 each wherein a through hole 18 configured to fix the head of a self-drilling screw 16 intended to be inserted in the bone adjacent to the implant is made.

According to another embodiment of the device for optimizing the primary stability for dental implants inserted at the same surgical time with the sinus lift procedure, as illustrated in Fig. 8, the fixing head section 5 is provided at an end of the minor axis 13 with a fin 17 wherein a through hole 18 configured to fix the head of a self-drilling screw 16 intended to be inserted in the bone adjacent to the implant is made. Only as an example, the diameter of the through hole 18 may be comprised between 1.2 mm and 1.8 mm. The width of the fin 17 may be comprised between 3 mm and 7 mm.

Preferably, the device for optimizing the primary stability for dental implants inserted at the same surgical time with the sinus lift procedure, according to the present invention, is made of titanium, zirconium or alloys thereof or a magnesium based alloy. The procedure of making the device involves, for example, methods such as: conventional milling, cad-cam, forging, sintering, 3D printing, spark erosion, moulding and further processing with a view to ensure sterile conditions. The surface of the device may be treated by methods such as: sand blasting, polishing/grinding, etching, anodizing, plasma spraying, laser treating, bioactive materials covering, nano-structural or nano-particles treatments. Further, the contact surface between the device and the gingival tissue may be treated with zirconium oxide, magnesium oxide, silver or other types of chemical elements with a view to optimizing the biocompatibility.

Although the present application is described with reference to the preferred embodiments, different improvements may be brought to the present application. In particular, as long as there is no structural conflict, the technical characteristics mentioned in each of the embodiments may be combined in any manner, all within the scope of the appended claims. The present application is not limited to the disclosed particular embodiments, but it includes all the technical solutions which fall in the scope of the present application as it is defined by the claims.

## Claims

1. Device for optimizing the primary stability for dental implants inserted at the same surgical time with the sinus lift procedure, comprising a one piece body configured in the lower part (1) in the form of a biocompatible screw featuring a male thread suitable for allowing the screwing of the device inside an implant (D) to be stabilised when the device is fitted, the lower part (1) in the form of a screw being continued with a tapered centering section (2), not threaded, configured to be arranged inside the implant (D), the major diameter of the said tapered centering section (2) being configured to be positioned flush with the upper face of the implant (D) when the device is fitted in the implant (D), the tapered centering section (2) being continued with a stabilising section formed externally of at least a first full turn of thread (3) and a second full turn of thread (4), the diameter of the second turn of thread (4) being larger than the diameter of the first turn of thread (3), the stabilising section being configured to be positioned in the sub-sinusal bone (C) and, therefore, outside of the implant (D), the stabilising section being provided inside with a hexagonal socket (15) configured to cooperate with a hexagonal wrench with a view to fitting of the device in the implant (D),
**characterized in that**
the one piece body of the device ending on the side opposite to the lower part with an ovoid shaped fixing head section (5) having a thickness comprised between 0.1 and 0.5 mm, and being configured such that during use its major axis (11) coincides with the mesio-distal axis of the alveolar bone.

2. Device according to claim 1, wherein the fixing head section (5) is provided with two diametrically opposed semi-circular cut-outs (14) and located at the ends of the major axis (11), each cut-out (14) being configured to fix the head of a self-drilling screw (16) configured to be inserted in the bone adjacent to the implant.

3. Device according to claim 1, wherein the fixing head section (5) is provided at an end of the major axis (11) with a fin (17) wherein a through hole (18) configured to fix the head of a self-drilling screw (16) configured to be inserted in the bone adjacent to the implant is made.

4. Device according to claim 1, wherein the fixing head section (5) is provided at both end of the major axis (11) with a fin (17) each wherein a through hole (18) configured to fix the head of a self-drilling screw (16) configured to be inserted in the bone adjacent to the implant is made.

5. Device according to claim 1, wherein the fixing head section (5) is provided at an end of the minor axis (13) with a fin (17) wherein a through hole (18) configured to fix the head of a self-drilling screw (16) configured to be inserted in the bone adjacent to the implant is made.

6. Device according to any one of the preceding claims, wherein the device is made of titanium, zirconium or alloys thereof or a magnesium based alloy.

7. Device according to any one of the preceding claims, wherein the surface of the device configured to contact the sub-sinusal bone when in use is polished or treated by one or more among the following methods: sand blasting, polishing/grinding, etching, anodizing, plasma spraying, laser treating, bioactive materials covering, nano-structural or nano-particles treatments, and the of the device configured to contact the gingival tissue when in use is treated with zirconium oxide, magnesium oxide, silver or other types of chemical elements with a view to optimizing the biocompatibility.

8. Device according to any one of the preceding claims, wherein the fixing head section (5) has a thickness of approximately 0.2 mm;

9. Device according to any one of the preceding claims, wherein the major axis (11) of the fixing head section (5) has the dimension comprised between x + 0.3 mm and x + 4 mm, preferably x + 2.2 mm, where x represents the external diameter of the widest turn of the implant (D) to be stabilised.

10. Device according to any one of the preceding claims, wherein the external diameter of the first full turn (3) of the stabilising section is x + 0.2 mm, where x represents the diameter of the widest turn of the implant (D) to be stabilised.

11. Device according to any one of the preceding claims, wherein the external diameter of the second full turn (4) of the stabilising section is x + 0.4 mm, where x represents the diameter of the widest turn of the implant (D) to be stabilised.

12. Device according to any one of the preceding claims, wherein the height of the surface of the device configured to contact the sub-sinusal bone surface, when in use, is comprised between 0.5 mm and 3 mm, preferably equal to 1.5 mm, and the pitch of the turns (3, 4) forming the outside of the stabilising section is comprised between 0.3 and 0.7 mm, preferably equal to 0.4 mm.

13. Device according to any one of the preceding claims, wherein the device is manufactured by one or more among the following methods: conventional milling, cad-cam, forging, sintering, 3D printing, spark erosion, moulding and further processing with a view to ensure sterile conditions, and the surface of the device is treated by one or more among the following methods: sand blasting, polishing/grinding, etching, anodizing, plasma spraying, laser treating, bioactive materials covering, nano-structural or nano-particles treatments.

## Patentansprüche

1. Vorrichtung zur Optimierung der Primärstabilität von Zahnimplantaten, die gleichzeitig mit einem Sinuslift-Eingriff eingesetzt werden, umfassend einen einteiligen Körper, der im unteren Teil (1) in Form einer biokompatiblen Schraube mit einem Außengewinde ausgebildet ist, das es ermöglicht, die Vorrichtung in ein Implantat (D) einzuschrauben, um dieses beim Einsetzen der Vorrichtung zu stabilisieren, wobei der als Schraube ausgebildete untere Teil (1) in einen konischen, gewindelosen Zentrierabschnitt (2) übergeht, der so ausgebildet ist, dass er im Inneren des Implantats (D) angeordnet werden kann, wobei der größte Durchmesser des genannten konischen Zentrierabschnitts (2) so ausgelegt ist, dass er bündig mit der Oberseite des Implantats (D) abschließt, wenn die Vorrichtung in das Implantat (D) eingebracht ist, wobei der konische Zentrierabschnitt (2) in einen Stabilisierungsabschnitt übergeht, der außenseitig aus mindestens einem ersten vollständigen Gewindegang (3) und einem zweiten vollständigen Gewindegang (4) gebildet ist, wobei der Durchmesser des zweiten Gewindegangs (4) größer ist als der Durchmesser des ersten Gewindegangs (3), wobei der Stabilisierungsabschnitt so ausgebildet ist, dass er im subsinusalen Knochen (C) und somit außerhalb des Implantats (D) positioniert wird, und wobei der Stabilisierungsabschnitt im Inneren mit einer Sechskantaufnahme (15) versehen ist, die zum Zusammenwirken mit einem Sechskantschlüssel zum Einsetzen der Vorrichtung in das Implantat (D) ausgebildet ist,
**dadurch gekennzeichnet, dass**
der einteilige Körper der Vorrichtung auf der dem unteren Teil gegenüberliegenden Seite in einem eiförmigen Befestigungskopfabschnitt (5) endet, der eine Dicke zwischen 0,1 und 0,5 mm aufweist und so ausgebildet ist, dass im Einsatz seine Hauptachse (11) mit der mesio-distalen Achse des Alveolarknochens zusammenfällt.

2. Vorrichtung nach Anspruch 1, wobei der Befestigungskopfabschnitt (5) mit zwei diametral gegenüberliegenden halbkreisförmigen Aussparungen (14) versehen ist, die sich an den Enden der Hauptachse (11) befinden, wobei jede Aussparung (14) zur Befestigung des Kopfes einer selbstbohrenden Schraube (16) ausgebildet ist, die dazu ausgelegt ist, in den an das Implantat angrenzenden Knochen eingeführt zu werden.

3. Vorrichtung nach Anspruch 1, wobei der Befestigungskopfabschnitt (5) an einem Ende der Hauptachse (11) mit einer Rippe (17) versehen ist, in der eine Durchgangsbohrung (18) ausgebildet ist, die zur Befestigung des Kopfes einer selbstbohrenden Schraube (16) dient, die dazu ausgelegt ist, in den an das Implantat angrenzenden Knochen eingeführt zu werden.

4. Vorrichtung nach Anspruch 1, wobei der Befestigungskopfabschnitt (5) an beiden Enden der Hauptachse (11) jeweils mit einer Rippe (17) versehen ist, in der jeweils eine Durchgangsbohrung (18) ausgebildet ist, die zur Befestigung des Kopfes einer selbstbohrenden Schraube (16) dient, die dazu ausgelegt ist, in den an das Implantat angrenzenden Knochen eingeführt zu werden.

5. Vorrichtung nach Anspruch 1, wobei der Befestigungskopfabschnitt (5) an einem Ende der Nebenachse (13) mit einer Rippe (17) versehen ist, in der eine Durchgangsbohrung (18) ausgebildet ist, die zur Befestigung des Kopfes einer selbstbohrenden Schraube (16) dient, die dazu ausgelegt ist, in den an das Implantat angrenzenden Knochen eingeführt zu werden.

6. Vorrichtung nach einem der vorstehenden Ansprüche, wobei die Vorrichtung aus Titan, Zirkonium oder Legierungen davon oder einer Magnesiumlegierung hergestellt ist.

7. Vorrichtung nach einem der vorstehenden Ansprüche, wobei die Oberfläche der Vorrichtung, die so ausgebildet ist, dass sie im Einsatz mit dem subsinusalen Knochen in Kontakt kommt, durch eines oder mehrere der folgenden Verfahren poliert oder behandelt ist: Sandstrahlen, Polieren/Schleifen, Ätzen, Eloxieren, Plasmaspritzen, Laserbearbeitung, Beschichtung mit bioaktiven Materialien, nanostrukturelle oder Nanopartikel-Behandlungen, und wobei der Teil der Vorrichtung, der im Einsatz mit dem Zahnfleischgewebe in Kontakt kommt, mit Zirkonoxid, Magnesiumoxid, Silber oder anderen chemischen Elementen behandelt ist, um die Biokompatibilität zu optimieren.

8. Vorrichtung nach einem der vorstehenden Ansprüche, wobei der Befestigungskopfabschnitt (5) eine Dicke von etwa 0,2 mm aufweist.

9. Vorrichtung nach einem der vorstehenden Ansprüche, wobei die Hauptachse (11) des Befestigungskopfabschnitts (5) eine Abmessung zwischen x + 0,3 mm und x + 4 mm, vorzugsweise von x + 2,2 mm, aufweist, wobei x den Außendurchmesser der breitesten Windung des zu stabilisierenden Implantats (D) darstellt.

10. Vorrichtung nach einem der vorstehenden Ansprüche, wobei der Außendurchmesser der ersten vollständigen Windung (3) des Stabilisierungsabschnitts x + 0,2 mm beträgt, wobei x den Durchmesser der breitesten Windung des zu stabilisierenden Implantats (D) darstellt.

11. Vorrichtung nach einem der vorstehenden Ansprüche, wobei der Außendurchmesser der zweiten vollständigen Windung (4) des Stabilisierungsabschnitts x + 0,4 mm beträgt, wobei x den Durchmesser der breitesten Windung des zu stabilisierenden Implantats (D) darstellt.

12. Vorrichtung nach einem der vorstehenden Ansprüche, wobei die Höhe der Oberfläche der Vorrichtung, die so ausgebildet ist, dass sie im Einsatz mit der subsinusalen Knochenoberfläche in Kontakt kommt, zwischen 0,5 mm und 3 mm liegt, vorzugsweise 1,5 mm beträgt, und die Steigung der Windungen (3, 4), die die Außenseite des Stabilisierungsabschnitts bilden, zwischen 0,3 und 0,7 mm liegt, vorzugsweise 0,4 mm beträgt.

13. Vorrichtung nach einem der vorstehenden Ansprüche, wobei die Vorrichtung durch eines oder mehrere der folgenden Verfahren hergestellt wird: konventionelles Fräsen, CAD/CAM, Schmieden, Sintern, 3D-Druck, Funkenerosion, Gießen und Weiterverarbeitung zur Gewährleistung steriler Bedingungen, und die Oberfläche der Vorrichtung durch eines oder mehrere der folgenden Verfahren behandelt wird: Sandstrahlen, Polieren/Schleifen, Ätzen, Eloxieren, Plasmaspritzen, Laserbearbeitung, Beschichtung mit bioaktiven Materialien, nanostrukturelle oder Nanopartikel-Behandlungen.

## Revendications

1. Dispositif destiné à optimiser la stabilité primaire d'implants dentaires posés au cours de la même intervention chirurgicale que la procédure de soulevé de sinus, comprenant un corps monobloc configuré, dans sa partie inférieure (1), sous la forme d'une vis biocompatible dotée d'un filetage mâle adapté pour permettre le vissage du dispositif à l'intérieur d'un implant (D) à stabiliser lors de la mise en place du dispositif, la partie inférieure (1) en forme de vis se prolongeant par une section de centrage conique (2), non filetée, conçue pour être disposée à l'intérieur de l'implant (D), le diamètre majeur de ladite section de centrage conique (2) étant conçu pour être positionné au ras de la face supérieure de l'implant (D) lorsque le dispositif est monté dans l'implant (D), la section de centrage conique (2) se prolongeant par une section de stabilisation formée extérieurement d'au moins un premier spire complète (3) et d'un deuxième spire complète (4), le diamètre du deuxième spire complète (4) étant supérieur au diamètre du premier spire complète (3), la section de stabilisation étant conçue pour être positionnée dans l'os sous-sinusal (C) et, par conséquent, à l'extérieur de l'implant (D), la section de stabilisation étant pourvue à l'intérieur d'un logement hexagonal (15) conçu pour coopérer avec une clé hexagonale en vue de la mise en place du dispositif dans l'implant (D),
**caractérisé en ce que**
le corps monobloc du dispositif se termine, du côté opposé à la partie inférieure, par une section de tête de fixation (5) de forme ovoïde, d'une épaisseur comprise entre 0,1 et 0,5 mm, et configurée de telle sorte que, lors de l'utilisation, son axe principal (11) coïncide avec l'axe mésio-distal de l'os alvéolaire.

2. Dispositif selon la revendication 1, dans lequel la partie de tête de fixation (5) est pourvue de deux découpes semi-circulaires (14) diamétralement opposées et situées aux extrémités du axe principal (11), chaque découpe (14) étant conçue pour fixer la tête d'une vis autoperceuse (16) destinée à être insérée dans l'os adjacent à l'implant.

3. Dispositif selon la revendication 1, dans lequel la partie formant tête de fixation (5) est pourvue, à une extrémité de l'axe principal (11), d'une ailette (17) dans laquelle est pratiqué un trou traversant (18) conçu pour fixer la tête d'une vis autoperceuse (16) destinée à être insérée dans l'os adjacent à l'implant.

4. Dispositif selon la revendication 1, dans lequel la section de tête de fixation (5) est pourvue, aux deux extrémités de l'axe principal (11), d'une ailette (17) dans chacune desquelles est pratiqué un trou traversant (18) conçu pour fixer la tête d'une vis autoperceuse (16) destinée à être insérée dans l'os adjacent à l'implant.

5. Dispositif selon la revendication 1, dans lequel la section de tête de fixation (5) est pourvue, à une extrémité de l'axe secondaire (13), d'une ailette (17) dans laquelle est pratiqué un trou traversant (18) conçu pour fixer la tête d'une vis autoperceuse (16) destinée à être insérée dans l'os adjacent à l'implant.

6. Dispositif selon l'une quelconque des revendications précédentes, dans lequel le dispositif est réalisé en titane, en zirconium ou en alliages de ceux-ci, ou en un alliage à base de magnésium.

7. Dispositif selon l'une quelconque des revendications précédentes, dans lequel la surface du dispositif configurée pour entrer en contact avec l'os sous-sinusal lors de son utilisation est polie ou traitée par un ou plusieurs des procédés suivants : sablage, polissage/meulage, gravure, anodisation, projection au plasma, traitement au laser, revêtement de matériaux bioactifs, traitements nanostructuraux ou à base de nanoparticules, et la partie du dispositif destinée à entrer en contact avec le tissu gingival lors de son utilisation est traitée avec de l'oxyde de zirconium, de l'oxyde de magnésium, de l'argent ou d'autres types d'éléments chimiques en vue d'optimiser la biocompatibilité.

8. Dispositif selon l'une quelconque des revendications précédentes, dans lequel la partie formant tête de fixation (5) présente une épaisseur d'environ 0,2 mm ;

9. Dispositif selon l'une quelconque des revendications précédentes, dans lequel l'axe principal (11) de la partie de tête de fixation (5) présente une dimension comprise entre x + 0,3 mm et x + 4 mm, de préférence x + 2,2 mm, où x représente le diamètre extérieur de la spire la plus large de l'implant (D) à stabiliser.

10. Dispositif selon l'une quelconque des revendications précédentes, dans lequel le diamètre extérieur de la première spire complète (3) de la partie de stabilisation est de x + 0,2 mm, x représentant le diamètre de la spire la plus large de l'implant (D) à stabiliser.

11. Dispositif selon l'une quelconque des revendications précédentes, dans lequel le diamètre extérieur de la deuxième spire complète (4) de la section de stabilisation est de x + 0,4 mm, x représentant le diamètre de la spire la plus large de l'implant (D) à stabiliser.

12. Dispositif selon l'une quelconque des revendications précédentes, dans lequel la hauteur de la surface du dispositif configurée pour entrer en contact avec la surface osseuse sous-sinusale, lors de l'utilisation, est comprise entre 0,5 mm et 3 mm, de préférence égale à 1,5 mm, et le pas des spires (3, 4) formant l'extérieur de la section de stabilisation est compris entre 0,3 et 0,7 mm, de préférence égal à 0,4 mm.

13. Dispositif selon l'une quelconque des revendications précédentes, dans lequel le dispositif est fabriqué selon un ou plusieurs des procédés suivants : fraisage conventionnel, CAO-FAO, forgeage, frittage, impression 3D, électroérosion, moulage et traitements complémentaires visant à garantir des conditions stériles, et la surface du dispositif est traitée selon un ou plusieurs des procédés suivants : sablage, polissage/meulage, gravure, anodisation, projection au plasma, traitement au laser, revêtement de matériaux bioactifs, traitements nanostructuraux ou à base de nanoparticules.
